**Europäisches Patentamt**

**European Patent Office**

**Office européen des brevets**

(11) Publication number: **0  165  604**

**A2**

(12) # EUROPEAN PATENT APPLICATION

(21) Application number: **85107597.8**

(22) Date of filing: **19.06.85**

(51) Int. Cl.⁴: **G 06 F 3/16**

(30) Priority: **20.06.84 JP 90891/84**

(43) Date of publication of application:
**27.12.85 Bulletin 85/52**

(84) Designated Contracting States:
**CH DE FR GB LI**

(71) Applicant: **CASIO COMPUTER COMPANY LIMITED**
**6-1, 2-chome, Nishi-Shinjuku**
**Shinjuku-ku Tokyo(JP)**

(72) Inventor: **Fujii, Hiroshi**
**103 Corpo-Taniai 867-28, Kumakawa**
**Fussa-shi Tokyo(JP)**

(74) Representative: **Strasse, Joachim, Dipl.-Ing. et al,**
**Strasse und Stoffregen European Patent Attorneys**
**Zweibrückenstrasse 17**
**D-8000 München 2(DE)**

(54) Recording/reproducing apparatus including a digital memory device.

(57) A recording/reproducing device (100) includes a digital memory device (12). Acoustic information such as voices and music normally contains undesirable acoustic information, e.g., noises. To save the digital memory capacity of the digital memory device (12), such undesirable acoustic information is deleted from the original acoustic information by a data analyzing device (6) before being recorded in the digital memory device (12). In a memory region of the digital memory device (12), there is data indicating the undesirable acoustic information. When the recorded acoustic information of the digital memory device (12) is reproduced in a recording/reproducing unit (14), not only the recorded acoustic information but also the deleted undesirable acoustic information can be reproduced in a substantially original condition of the acoustic information.

./...

EP 0 165 604 A2

F I G. 1

- 1 -

Recording/reproducing apparatus
including a digital memory device

The present invention relates to a recording/reproducing apparatus including a digital memory device for recording desirable sound information such as voices in the digital memory device after deleting undesirable sound information from original sound information and for reproducing the recorded desirable sound information in conjunction with the deleted undesirable sound information so as to reproduce the original sound information.

In a small electronic appliance having a recording function, a magnetic recording tape or a disc are employed for recording voices, music and so on. Recently, a semiconductor memory of a random access memory (RAM) is utilized as a recording medium to record voice data and music data in a digital form. Such a semiconductor recording medium built in a small electronic appliance is known, for instance, from U.S. Patent No. 4,391,530 to Wakabayashi, issued on July 5, 1983.

In certain conventional appliances, the recording medium is wasted during the recording operation since the appliance is still operated in the recording mode even when no sound information is produced. To solve the above problem, the various attempts have been taken into the electronic appliances having such recording functions.

For instance, cassette tape recorders employ a so-called "automatic shut off" technique that automatically stops the drive motor in response to detection signals indicating no voice input in the recording mode, and automatically commences the recording operation upon receipt of succeeding voice inputs. According to such an automatic shut off operation, although the recording tape is not wasted during the recording mode, it is difficult to completely reproduce the original voice conditions because only the voice information recorded on the tape is reproduced without any processing. That is to say, in the reproducing mode, the tape recorder reproduces such recorded voice information with omitting "no voice" conditions, so that an audience can hardly recognize or imagine the original voice information.

It is therefore an object of the present invention to provide a recording/reproducing apparatus including a digital memory device in which desirable sound information is recorded in a digital memory device after deleting undesirable sound information from original sound information, and for reproducing the recorded desirable sound information in conjunction with the deleted undesirable sound information so as to reproduce the original sound information.

The object of the present invention may be accomplished by providing a recording/reproducing apparatus including a digital memory device comprising:

acoustic converter means for performing acoustic conversion between acoustic information containing desirable and undesirable acoustic information, and analogue audio signals;

A/D-converting means for converting the analogue audio signals into digital audio data;

analyzing means for analyzing said undesirable acoustic information to produce undesirable audio time data;

memory means for storing the digital audio data converted by said A/D-converting means and for storing said undesirable audio time data derived from the analyzing means;

first control means for prohibiting said digital audio data being recorded in the memory means while the undesirable acoustic information is being analyzed by the analyzing means;

readout means for reading out said digital audio data previously stored in the memory means;

D/A-converting means for D/A-converting the read digital audio data into corresponding analogue audio signals; and

second control means for interrupting operation of said readout means and for performing reproducing of a time period of the undesirable audio time data previously stored in the memory means, whereby said desirable audio information is derived from the acoustic converter means in conjunction with said undesirable audio information to reproduce said acoustic information.

In accordance with the present invention, it is possible to entirely utilize the recording medium without wasting it in the recording mode when the undesirable sound information occurs and also to reproduce the original sound information containing the undesirable sound information. Further, since the recording and reproducing operations are electrically interrupted during the occurrence of the undesirable sound information, a power consumption can be reduced.

According to one embodiment, the particular advantage is obtained in that a relatively large numbers of acoustic command can be digitally recorded in a RAM without using redundant memory regions.

For a better understanding of these and other objects of the present invention, reference is made to the following detailed description of the invention to be read in conjunction with the following drawings, in which;

Fig. 1 is a schematic diagram of a recording/reproducing apparatus according to one preferred embodiment of the invention;

Fig. 2 is a block diagram of the data analyzing unit in Fig. 1;

Fig. 3 is a block diagram of the recording/reproducing unit 14 in Fig. 1;

Fig. 4 shows an illustration of a memory format of the audio data memory unit in Fig. 1;

Fig. 5 shows an illustration of a memory format of the silent time memory unit in Fig. 1;

Figs. 6A to 6E show a timing chart of the recording unit and relevant circuit elements in Fig. 1;

Fig. 7 shows an illustration of a modified memory format of the audio data memory unit in Fig. 1;

Fig. 8 is a block diagram of another embodiment of a recording/reproducing unit; and

Fig. 9 shows a display panel of the display unit in Fig. 1.

A detailed description of the invention, as given in this specification, is organized in accordance with the following index which is presented for the convenience of the reader.

GENERAL DESCRIPTION OF PREFERRED EMBODIMENTS DETAILED DESCRIPTION OF ELECTRONIC TIMEPIECE ARRANGEMENT OF ELECTRONIC TIMEPIECE

DETAILED CIRCUIT ARRANGEMENT OF DATA ANALYZING UNIT DETAILED CIRCUIT ARRANGEMENT OF RECORDING/REPRODUCING UNIT

MEMORY FORMAT

RECORDING MODE

REPRODUCING MODE

MODIFIED MEMORY FORMAT

ANOTHER EMBODIMENT OF RECORDING/REPRODUCING UNIT

GENERAL DESCRIPTION OF PREFERRED EMBODIMENTS

It is apparent that a recording/reproducing apparatus including a digital memory device in accordance with the present invention may be realized as various electronic appliances having recording/reproducing functions. In particular, a great advantage is obtained in that a small electronic timepiece is comprised of a random access memory. However the present invention is not limited to this embodiment, but can be applied to the other appliances.

DETAILED DESCRIPTION OF ELECTRONIC TIMEPIECE

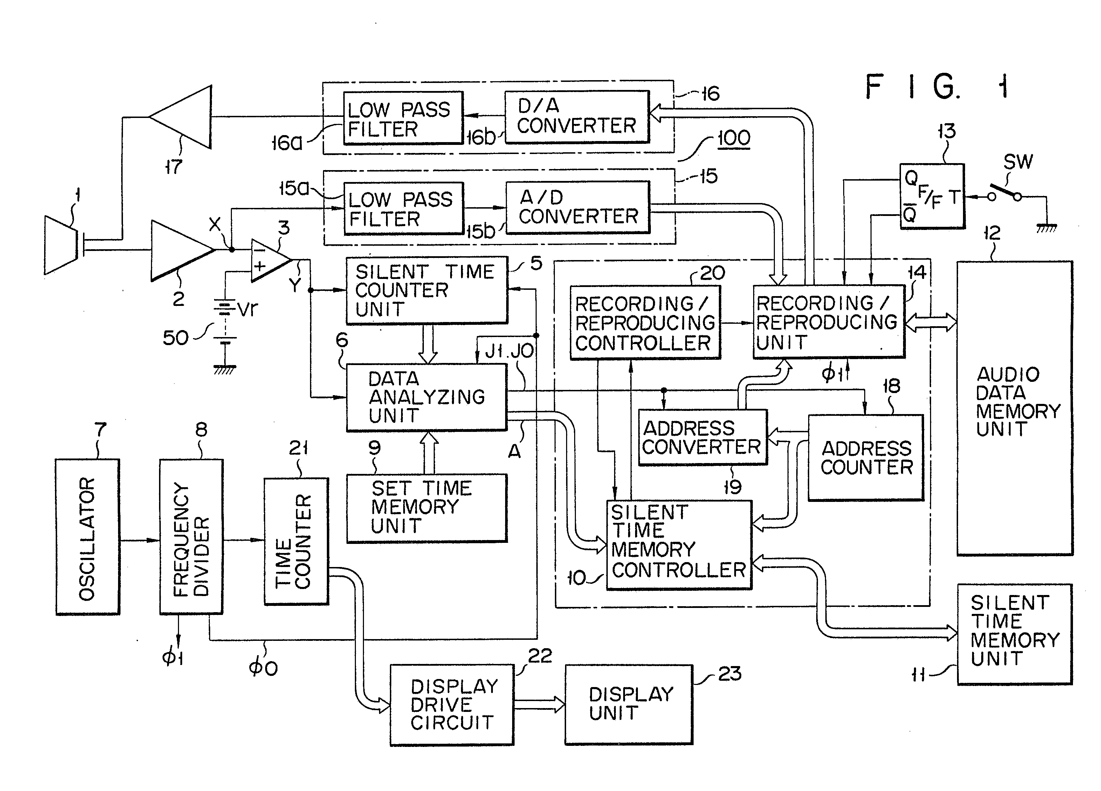

Fig. 1 shows an electronic timepiece 100 such as a wrist watch, according to one embodiment, including a semiconductor memory for recording and reproducing sound information, e.g., voices and music. The electronic timepiece 100 has two functions, i.e., the ordinary time function, and the recording/reproducing function which is electronically communicated with the time function.

In the recording/reproducing function which is a particular feature of the invention, only the desirable sound information such as conversation and music is recorded in serial conditions in the RAM after the undesirable sound information, e.g., noises is deleted from the original sound information. In the reproduction mode, the recorded desirable sound information is reproduced with the deleted undesirable information superimposed on it, so that the original sound information is ultimately reproduced.

ARRANGEMENT OF ELECTRONIC TIMEPIECE

Referring to Fig. 1, a description will now be made of an arrangement of the electronic timepiece 100. An acoustic converter 1 is provided as a microphone in the recording mode and a speaker in the reproducing mode. Audio information, e.g., voice or music is first converted into an audio signal. The audio signal is amplified in a recording amplifier 2 to a given signal level, and then the amplified signal is supplied to a negative input terminal of a comparator 3. To a positive input terminal of this comparator 3 a reference voltage Vr is being applied from a DC source 50. An output signal of the comparator 3, as described hereinafter, is supplied to a silent time counter unit 5. The output represents whether levels of the audio signal derived from the amplifier 2 exceed the reference voltage level.

An oscillator 7 oscillates a signal in a given frequency. The signal is frequency-divided into a predetermined clock signal by a frequency divider 8. The clock signal has two frequency components of $\phi_1$ and $\phi_0$. The former signal $\phi_1$ is used as a sampling signal. The latter clock signal $\phi_0$ is supplied to the silent time counter unit 5 and the data analyzing unit 6 respectively. The silent time counter unit 5 measures the silent time, i.e., no audio signal by counting the clock signal $\phi_0$. The silent time information is given from the comparator outputs. The resultant data (i.e., the silent time) is transferred to the data analyzing unit 6.

The data analyzing unit 6 receives set time data from a set time memory unit 9. Also another time is preset by an external switch (not shown). When the measured silent time is longer than the preset set time of the set time memory unit 9, time difference data "A" and discrimination signals "$J_0$" and "$J_1$" are derived as undesirable audio time data from the data analyzing unit 6. The time difference data "A" is transferred via a silent time memory controller 10 to a silent time memory unit 11 where it is stored under the control of the silent time memory controller 10. Another function of the silent time memory controller 10 is to control reproduction operations, data of which have been stored in a digital form in the silent time memory unit 11.

A pushbotton switch SW is provided as an operation mode selector. The pushbotton switch SW is connected to a trigger terminal T of a triggerable flip-flop (T-FF) 13. The switching conditions of the mode selector switch SW are inverted in the flip-flop 13. From outputs Q and $\bar{Q}$ of the flip-flop 13, mode designation signals for the recording and reproducing modes are supplied to a recording/reproducing unit 14. In response to the outputs Q and $\bar{Q}$ of the flip-flop 13 either the recording mode or the reproducing mode is selected by the recording/reproducing unit 14. In the recording mode, the analogue aural signal derived from the amplifier 2 is filtered in a low pass filter 15a and then converted into a digital aural data by an analogue-to-digital (A/D) converter 15b. The digital audio data is supplied to the recording/reproducing unit 14. The low pass filter 15a and the A/D converter 15b constitute an A/D conversion unit 15. The digital audio data is sequentially stored in an audio data memory unit 12, as described in detail hereinafter. When the reproducing mode is selected by the selector switch SW, the digital audio data is sequentially read out from the audio data memory unit 12, and D/A-converted by a D/A converter 16b into the corresponding analogue audio signal. The analogue audio signal is further processed in a low pass filter 16a and an amplifier 17. The amplified audio signal is converted in the acoustic converter 1 into the original acoustic information as described in detail hereinafter.

On the other hand, one control signal of a recording/reproducing controller 20 is supplied to the recording/reproducing unit 14. The recording/reproducing controller 20 causes the recording operation of the recording/reproducing unit 14 to be interrupted upon receipt of one analysis or discrimination signal "$J_0$". The analysis signal "$J_0$" is produced from the data analyzing unit 6 in a case that the measured silent time is longer than the preset time of the set time memory unit 9. In the reproduction mode, the recording/reproducing controller 20 interrupts the reproducing operation of the recording/reproducing unit 14 when the time difference data is read out from the silent time memory unit 11.

Memory addresses of the silent time memory unit 11 are designated by a 4-bit address counter 18. Address data of the address counter 18 is transferred via a silent time memory controller 10 to the silent time memory unit 11, and also is converted into 8-bit data by an address converter 19. The 8-bit data is stored in the audio data memory unit 12.

A time clock signal of 1 Hz is produced from the frequency divider 8 to be sent to a time counter 21. The time and date data are obtained in the time counter 21 by counting the time clock signal. The time and date data are sent to a display drive circuit 22 in which they are converted into display data. This display data is further sent to a display unit 23 to be opto-electronically displayed.

DETAILED CIRCUIT ARRANGEMENT OF DATA ANALYZING UNIT

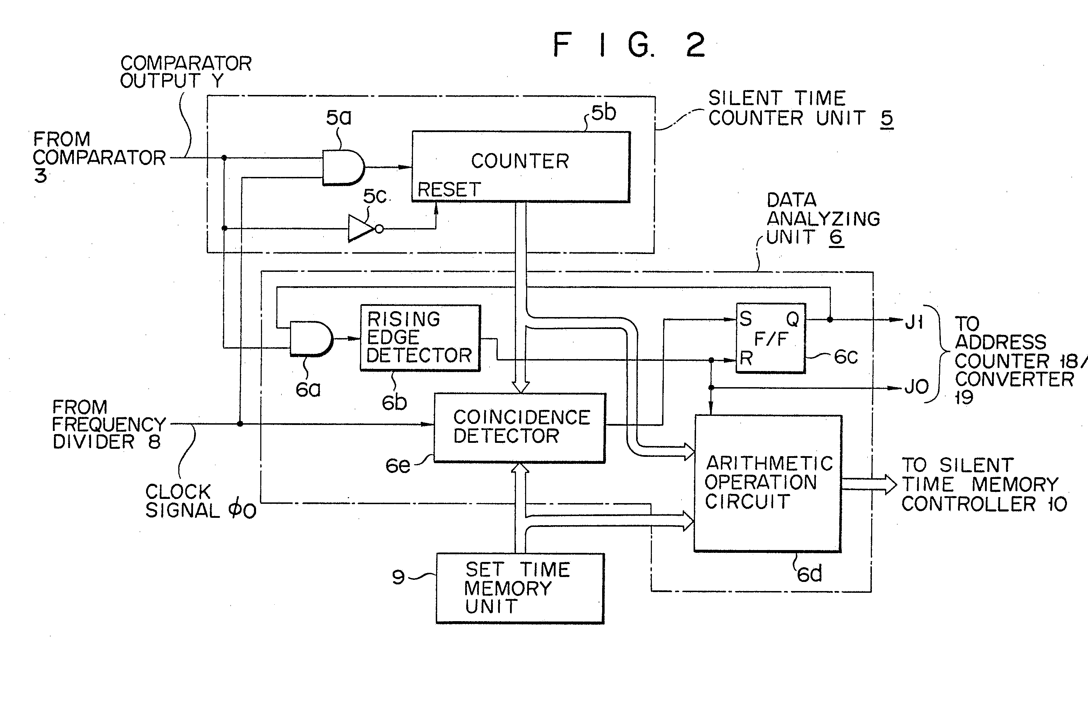

Fig. 2 is an internal circuit diagram of the data analyzing unit 6 in connection with the silent time counter unit 5 and the set time memory unit 9.

The output signal Y of the comparator 3 is supplied to one input of an AND gate 5a and the clock signal $\phi_0$ of the frequency divider 8 is supplied to the other input of the AND gate 5a. An output of this AND gate 5a is supplied to a counter 5b. The comparator output Y is also supplied via an inverter 5c to a reset terminal of the counter 5b. Further, the comparator output Y is supplied via an AND gate 6a to a rising edge detector 6b. An output pulse signal "$J_0$" of the rising edge detector 6b is supplied to a reset terminal of a flip-flop 6c and to an arithmetic operation circuit 6d as an operation command signal, and is derived from the data analyzing unit 6. The arithmetic operation circuit 6d calculates a difference between the output of the counter 5b and the output of the set time memory unit 9, i.e., the preset time.

A coincidence detector 6e of the data analyzing unit 6 receives the output of the counter 5b and the preset time of the set time memory unit 9. As a consequence, the detector 6e detects the data coincidence of these inputs in synchronism with the clock signal $\phi_0$. The coincidence signal is then supplied to the set terminal of the flip-flop 6c. From the set output Q of this flip-flop 6c, an output or discrimination signal "$J_1$" is derived and also supplied to the AND gate 6a. In summary, the first discrimination signal "$J_1$" is the coincidence signal produced when the measured silent time reaches the set time, and the second discrimination signal "$J_0$" is the rising-edge detection signal produced when the succeeding audio signal is detected.

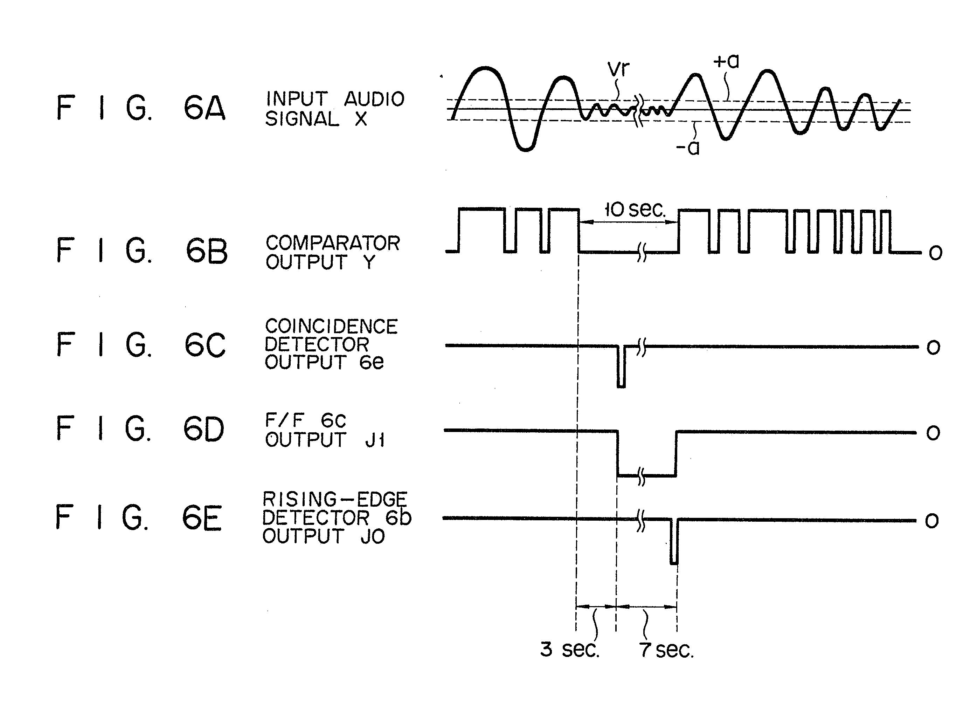

The waveforms and their timing charts are shown in Fig. 6, as discussed hereinafter.

DETAILED CIRCUIT ARRANGEMENT OF RECORDING/REPRODUCING UNIT

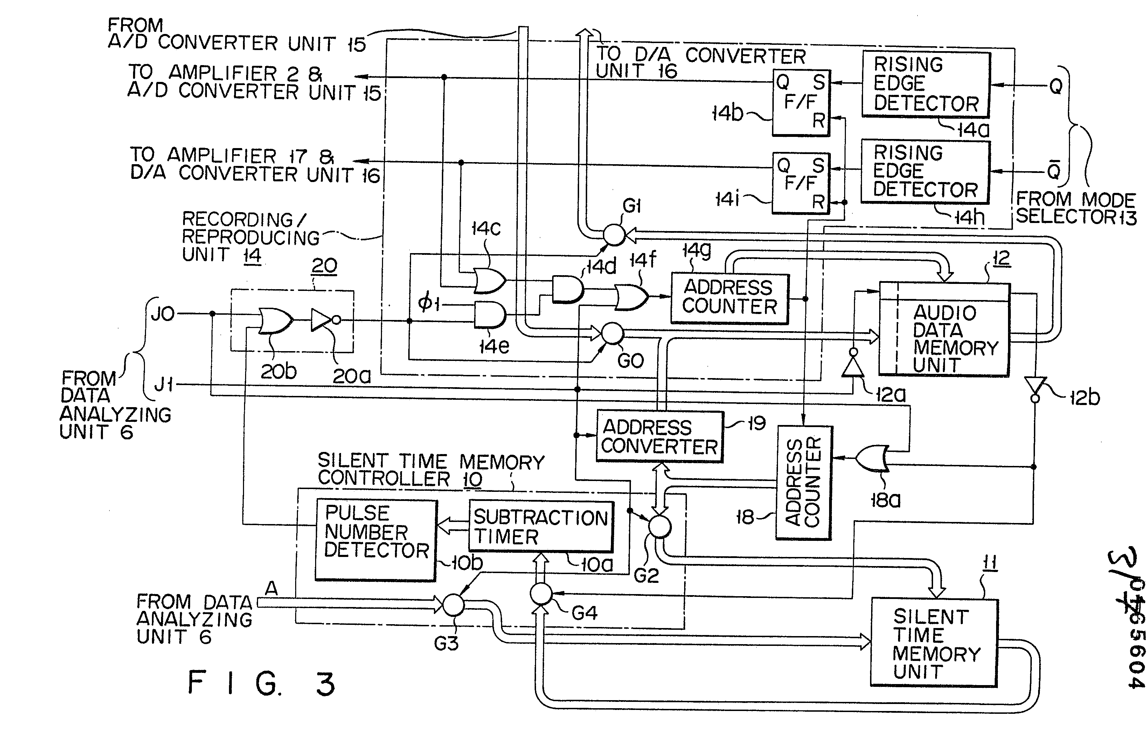

Fig. 3 is an internal circuit diagram of the recording/reproducing unit 14 and its relevant units 10 and 20.

The output signal of the output terminal Q of the mode selecting flip-flop 13 is supplied to a rising edge detector 14a for the recording mode of the recording/reproducing unit 14. An output of the rising edge detector 14a is supplied to a set terminal S of a flip-flop 14b. An output of an output terminal Q of the flip-flop 14b is supplied as an operation command signal to the amplifier 2 and the A/D converter unit 15, and supplied via an OR gate 14c to one input terminal of an AND gate 14d. To other input terminal of the AND gate 14d, an output of an AND gate 14e is supplied. This AND gate 14e has two input terminals; one receiving the sampling signal $\phi_1$ of the frequency divider 8 and the other receiving an output of an inverter 20a of the recording/reproducing controller 20.

When the logic level of the output of the recording/reproducing controller 20 is equal to "1", the AND gate 14e delivers the sampling signal $\phi_1$ to the address counter 14g through the following AND gate 14d and OR gate 14f. Accordingly, the address counter 14g for the audio data memory unit 12 starts its counting operation. At the same time, since gate circuits $G_0$ and $G_1$ are opened by receiving the output of the inverter 20a, the audio data derived from the A/D converter unit 15 is sequentially transferred via the gate circuit $G_0$ to the audio data memory unit 12. In this memory unit 12, the audio data is sequentially stored in a given memory region which is addressed by the address counter 14g.

The output of the output terminal $\overline{Q}$ of the mode selecting flip-flop 13 is sent to a rising edge detector 14h for the reproducing mode. An output of the rising edge detector 14h is delivered to a set terminal S of a flip-flop 14i. An output of the flip-flop 14i is supplied as a reproduction command signal to the amplifier 17 and the D/A converter unit 16, and also supplied to an OR gate 14c, so that the sampling pulse $\phi_1$ is counted in the address counter 14g. As a consequence, the audio data sequentially read out from the audio data memory unit 12 can be transferred through the above gate circuit $G_1$ to the D/A converter unit 16. The audio information is reproduced from the acoustic converter 1.

It should be noted that although read/write signals for the audio data memory unit 12 are not shown in the circuit diagram of Fig. 2, the write signal is sent to the memory unit 12 when the flip-flop 14b is set, while the read signal is sent to the memory unit 12 when the flip-flop 14i is set. A carry signal of the address counter 14g is supplied to these flip-flops 14b, 14i and the address counter 18 as the reset signal.

The discrimination signal "$J_1$" derived from the data analyzing unit 6 is sent via an inverter 20a to an OR gate 20b, and via an OR gate 18b to the address counter 18 as a logic 1-level signal. The other discrimination signal "$J_0$" is supplied through an inverter 12a to the audio data memory unit 12. This signal "$J_0$" is supplied to gate circuits $G_2$ and $G_3$ of the silent time memory controller 10 so as to open these gate circuits $G_2$ and $G_3$, and also supplied as a destination signal to the address converter 19.

The contents of the address counter 18 are being given to the gate circuit $G_2$ for the silent time memory controller 10, while the time difference data "A" is being applied to the gate circuit $G_3$ from the data analyzing unit 6. Upon receipt of the discrimination signal "$J_0$", both the gate circuits $G_2$ and $G_3$ are opened so that the time difference data "A" is stored in the memory regions of the silent time memory unit 11, which have been addressed by the address counter 18.

The silent time data read out from the silent time memory unit 11 is preset via the gate circuit $G_4$ into a subtraction timer 10a of the silent time memory controller 10. This gate circuit $G_4$ is opened by an output of the inverter 12a into which 1-bit data is input from the audio data memory unit 12. While a certain counting number is still present in this subtraction timer 10a, a logic 1-level signal is output from a pulse number detector 10b to the OR gate 20b of the recording/reproducing controller 20.

MEMORY FORMAT

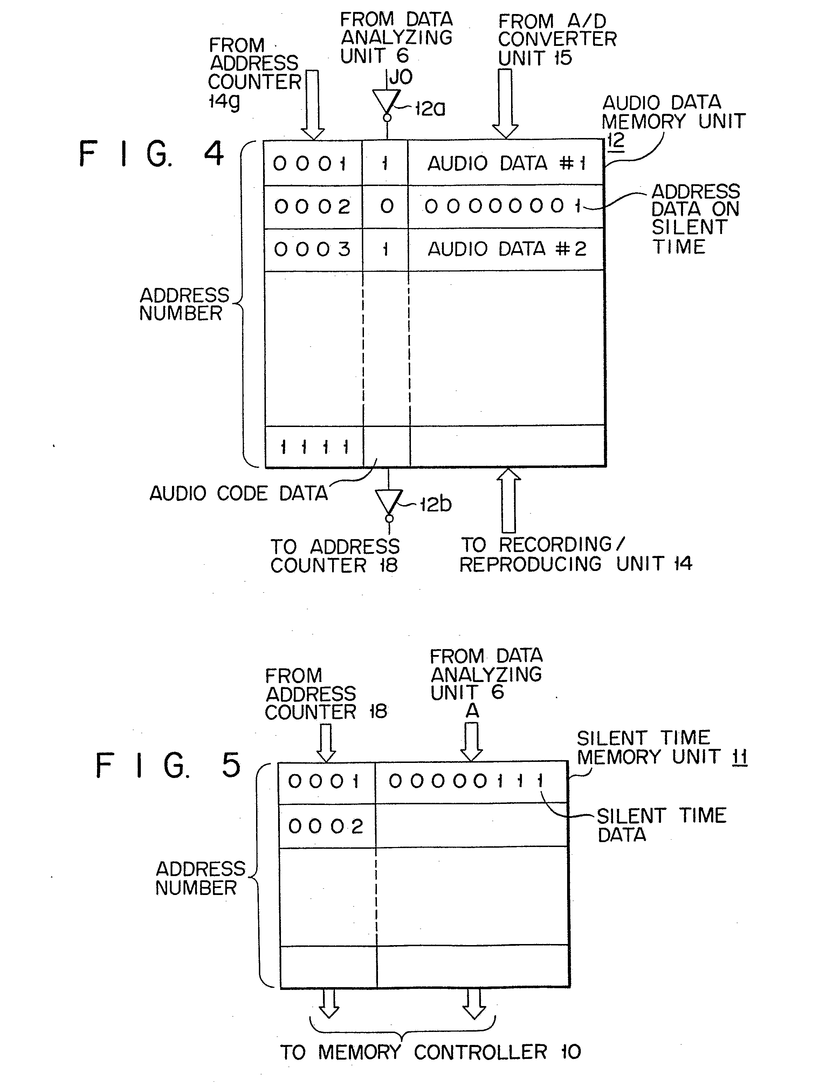

Referring now to Figs 4 and 5, memory formats schematically shown will be described.

In Fig. 4, the memory format and the relative input/output data for the audio data memory unit 12 are depicted and in Fig. 5, those for the silent time memory unit 11 are shown. The audio data memory unit 12 is divided into three regions, i.e., an address number region, an audio data code region and an audio data region. In each of the address regions, a voice code "1" or a no voice code "0" is stored in accordance with the address numbers 0001 , 0002 , --- 1111 , these codes being sent via the inverter 12a from the data analyzing unit 6. In each of the audio data regions, the audio data #1, #2 or the 8-bit address data of the silent time memory unit 11, e.g., 00000001 is stored respectively.

As previously described, the address region corresponding to the voice code "1" stores the audio data, and, on the other hand, one corresponding to the no voice code "0" stores the address data corresponding to the read address for the silent time memory unit 11 when the silent time data is stored in the silent time memory unit 11 (as described in detail hereinafter).

In the respective address regions designated by the address numbers, the corresponding silent time data is stored in 8-bit data, e.g., 00000111 . It is to be understood that the address number of the silent time memory unit 11 is 4-bit data, and this 4-bit data is converted into 8-bit data in the address converter 19 for the address number of the audio data memory unit 12.

RECORDING MODE

Referring back to the circuit arrangements shown in Fig. 1 through Fig. 3, a description will now be made of the recording mode.

Initially, the switch SW is operated to derive the output signal from the output terminal Q of the flip-flop 13. The rising edge of the output signal is detected in the rising edge detector 14a, so that the following flip-flop 14b is set (see Fig. 3). As a consequence, the amplifier 2 and the A/D converter unit 15 are in operation.

Assuming that the analogue audio signal of the amplifier 2 has a waveform as shown in Fig. 6A, this audio signal is supplied to one input of the comparator 3. To the other input of the comparator 3, the reference voltage Vr is being applied. When the input audio signal X exceeds a predetermined range ±a based upon the reference voltage Vr, a logic 1-level signal is produced from the comparator 3. When the input audio signal X does not exceed the above range (e.g., noises or no voice), then a logic 0-level signal is derived from the comparator 3. As a result, the comparator 3 outputs a rectangular waveform Y as shown in Fig. 6B. It should be understood that the 1-level signal represents the audio signal components such as voice or music, and the 0-level signal indicates no signal component, or smaller signal components than the given range ±a, e.g., noise components or no voice condition. Since the comparator output Y is pulse-width-modulated in the comparator 3, the width thereof represents the amplitude of the audio signal components or the duration time (for instance 10 seconds) of no signal component.

While the logic 0-level signal components of the comparator output Y do not appear at the input terminal of the data analyzing unit 6, neither discrimination signal "$J_0$", nor "$J_1$" is derived from the data analyzing unit 6, as described hereinafter. Accordingly, only the comparator, output containing the audio information is supplied via the low pass filter 15a and the A/D converter 15b to the recording/reproducing unit 14 and further to the audio data memory unit 12 through the gate circuit Go. Then, this audio data in combination with the 1-level signal (i.e., voice code data) from the inverter 12a is stored in the audio data memory unit 12 as shown in Fig. 4.

As previously explained, the audio signal in the logic level derived from the comparator 3 is supplied to the silent time counter unit 5 and the data analyzing unit 6 respectively. The content of the counter unit 5 is reset when the level of the input audio logic signal is changed from "0" to "1", and it starts the counting operation when the logic level is changed from "1" to "0". Since the silent time counter unit 5 performs its counting operations in accordance with the comparator's output signals i.e., the logic levels, the counted data corresponds to the silent time, e.g., 10 seconds in the present embodiment.

While the audio signal output from the comparator 3 remains "1" level, the data analyzing unit 6 effects its comparison on both the input data every clock signal $\phi_0$. In this case, if the counting time of the counter unit 5 does not yet reach the set time of the set time memory unit 9, the discrimination signals "$J_0$" and "$J_1$" remain "0" levels. In other words, because the silent time (the counted values of the silent time counter unit 5) is shorter than the set time (e.g., 3 seconds), both the discrimination signals are "0", so that the recording/reproducing controller 20 is kept in nonoperative condition. As a result, the analogue audio signal output from the amplifier 2 is A/D-converted into the digital audio data and then this audio data is transferred to the recording/reproducing unit 14. The recording/reproducing unit 14 performs the following write-in operation. The sequentially transferred groups of the audio data are successively written into the designated memory regions of the audio data memory unit 12 by designating the memory address from the top address to the bottom address. Accordingly, while the input silent time (i.e., the counted value) is shorter than the predetermined set time (e.g., 3 seconds) that is judged by the data analyzing unit 6, the acoustic information received by the acoustic converter 1 is recorded in a digital form in the audio memory unit 12 according to the normal recording process. Therefore, the recorded audio data (acoustic information) is recognized as the desirable audio data. It is understood that both the discrimination signals

"$J_0$" and "$J_1$" remain "zero(0)" during such a normal recording operation.

Referring now to Fig. 2, when the silent time counted in the counter 5b is equal to the set time of the set time memory unit 9 that is detected by the coincidence detector 6e, the output (coincidence signal) of the coincidence detector 6e can set the followed flip-flop 6c so that one discrimination signal "$J_1$" becomes "1" (see Figs. 6C and 6D). As a result, the inverter 20a of the recording/reproducing controller 20 derives a "0" level signal, the gate circuit $G_0$ is closed, and simultaneously no sampling pulse $\phi_1$ is produced from the AND gate 14e. This causes the recording/reproducing unit 14 to be nonoperative. Thus, the recording operation is interrupted.

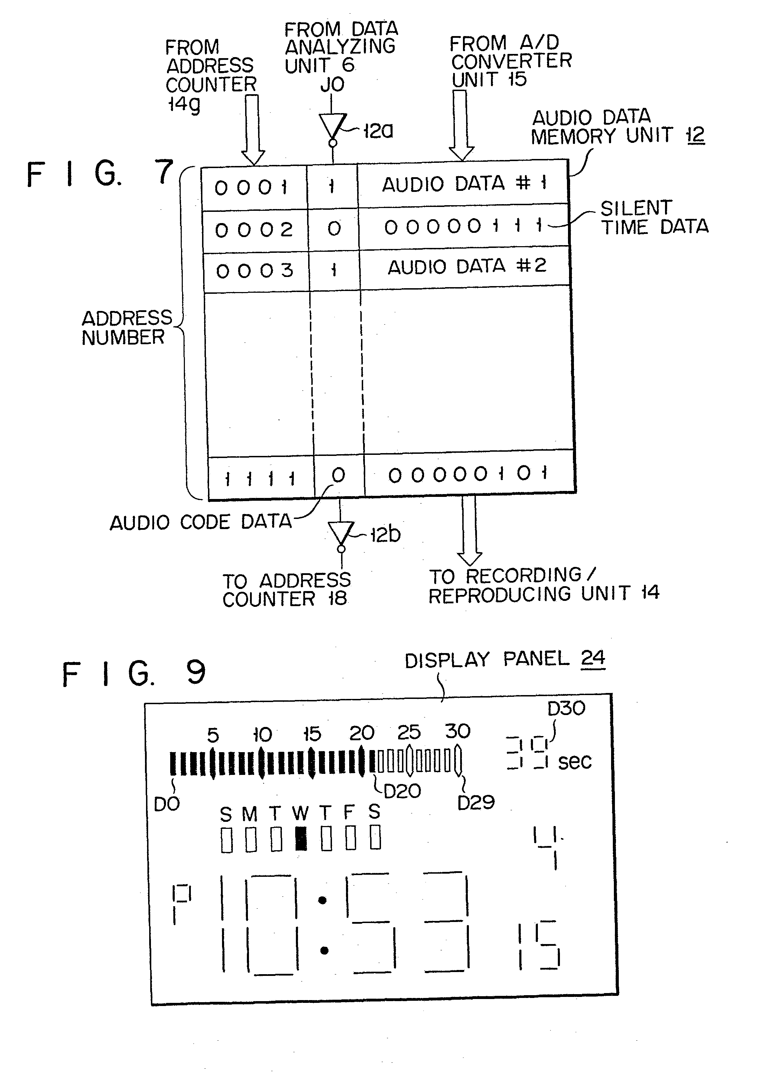

Subsequently, when the signal level of the input audio signal X rises (i.e., the desirable acoustic information), the data analyzing unit 6 outputs the other discrimination signal "$J_0$" from the rising edge detector 6b (see Fig. 6E). At the same time, the arithmetic operation unit 6d of the data analyzing unit 6 calculates a difference between the time data of the silent time counter 5 and the set time of the set time memory unit 9. In the present embodiment, as the set time is 3 seconds and the silent time amounts to 10 seconds, the difference time is 7 seconds (see Fig. 6E). This difference time data as the undesirable audio time data is transferred to the silent time memory controller 10. Upon receipt of the other discrimination signal "$J_0$" the silent time memory controller 10 enables the gate circuits $G_2$ and $G_3$ to be opened (Fig. 3). Addresses for the silent time memory unit 11 are designated depending upon the contents of the memory address counter 18. Consequently, the above 8-bit silent time data is written as the undesirable audio time data in the designated memory region under the control of the silent time memory controller 10 (see Fig. 7). At the same time, the memory address converter 19 converts the 4-bit address data stored in the address counter 18 into the 8-bit address data. The resultant 8-bit address data corresponding to the above silent time data is transferred to the recording/reproducing unit 14 as the recording data on the silent time.

Since the discrimination signal "$J_1$" is input to the OR gate 14f in the recording/reproducing unit 14, the contents of the address counter are counted up by (+1), while the output ("0" level signal due to the discriminating signal "$J_1$") of the inverter 12a and also the contents of the address counter 18 fed through the address converter 19 are stored in the memory regions of the audio data unit 12 designated by the address counter 14g.

As has been described, in accordance with the recording progress the silent time data is stored in the silent time memory unit 11, and both the audio data and the memory address indicating the silent time data are stored in the separate memory unit 12. That is, since only the audio data (desirable acoustic information) and the memory address representing silent time data are stored in the audio data memory unit 12, the memory capacity thereof can be considerably saved for the silent time data.

Although in the previous embodiment, the discrimination signals "$J_1$", "$J_0$" are produced when the silent time continues more than 3 seconds, it is obvious that any set time can be selected in the set time memory unit 9. For instance, if the set time is selected to be 0.1 second, the efficiency of the memory capacity of the audio data memory unit 12 can be greatly improved.

REPRODUCING MODE

When the recorded data is reproduced in the apparatus 100, the mode selector switch SW is actuated by one time. Thus, the outputs of the flip-flop 13 are turned in their opposite conditions, resulting in the reproduction mode. Under this condition, the recording/reproducing unit 14 functions as the reproducing unit. The audio data recorded in the memory region designated by the head address is started to be reproduced from the audio data memory unit 12 in the recording/reproducing unit 14. The reproduced audio data is D/A-converted in the D/A converter 16. The reproduced analogue signal is amplified in the amplifier 17. Finally, the audio data is reproduced from the acoustic converter 1 for audience.

When the audio code data "0" indicating "no voice" is detected, the contents of the address counter 18 is counted up by (+1) in response to the output of the inverter 12b (see Fig. 4). Simultaneously, the silent time data is read out from the silent time memory unit 11 and thereafter preset into the subtraction timer 10a. As a result, since the pulse number detector 10b outputs its detection signal to the OR gate 20b of the recording/reproducing controller 20, the signal level of the inverter 20a becomes "0", so that the count-up operation of the address counter 14g is interrupted (see Figs. 3 and 5).

When the contents of the subtraction timer 10a reaches "0", the output of the inverter 20a again becomes "1", so that the count-up operation of the address counter 14g is recovered. Accordingly, the succeeding audio data (desirable acoustic information) is read out from the audio data memory unit 12.

As easily understood from the foregoing descriptions, the reproducing operation is interrupted while the silent time data is processed, with the result that the silent time occurred in the input acoustic information can be completely reproduced in conjunction with the desirable acoustic information.

MODIFIED MEMORY FORMAT

Fig. 7 schematically shows another memory format of the audio data memory unit 12.

In the previous embodiment as shown in Figs. 1 through 6, the silent time data was stored in the silent time memory unit 11 different from the audio data memory unit 12. However, the present invention is not restricted to the above example.

As shown in Fig. 7, the silent time data "00000111" (corresponding to 7 seconds) is, for instance, directly stored in the memory region of the audio data memory unit 12 which is designated in conjunction with the no voice code "0". In this case, when this no voice code "0" is detected, the silent time data "00000111" is preset in the subtraction timer 10a. By doing this preset, the same reproducing operations can be realized in this modified embodiment.

ANOTHER EMBODIMENT OF RECORDING/REPRODUCING UNIT

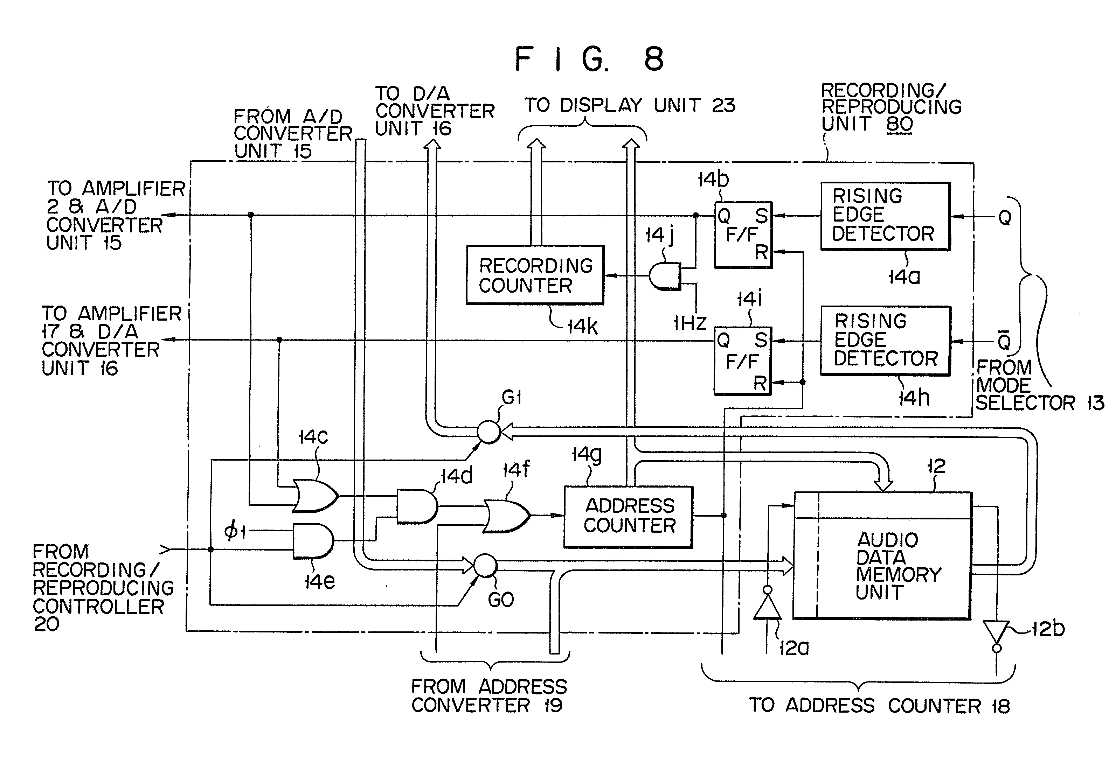

Fig. 8 is a schematic diagram of another recording/reproducing unit 80 according to the invention. The same reference numerals of the circuit elements in the previous unit 14 shown in Fig. 3 are used for the same or similar circuit elements in this unit 80. In Fig. 8, the output Q of the flip-flop 14b at the output side of the rising edge detector 14a is supplied to one input terminal of the AND gate 14j, while the other input, terminal of the AND gate 14j receives a signal having 1 Hz which is a time clock signal of the frequency divider 8. The outputs of the AND gate 14j are counted by the recording counter 14k. The resultant data of this recording counter 14 together with the contents of the address counter 14g are sent to the display drive unit 22 so as to display these data in the display unit 23.

In Fig. 9, a typical display panel 24 is shown as the display unit 23. In this display panel 24, there are representations of "DAY 4TH, WEDNESDAY, PM 10h 53m 15s" and furthermore the contents of the address counter 14g are decoded to be displayed by illuminating proper numbers of 30 display elements $D_0$ to $D_{20}$. In addition,

the contents of the recording counter 14k are displayed in the 2-digit digital display element $D_{30}$. If the memory capacity of the audio data memory unit 12 is capable of recording 30 minutes' audio data, for example, the display elements $D_0$ to $D_{21}$ are illuminated for indicating that the audio data has been already recorded for approximately 21 seconds.

On the other hand, since the input acoustic information contains silent time (no voice) or the undesirable acoustic information, the actual recording time including the silent time is measured by the recording counter 14k. The measured data, for instance, 39 seconds is displayed by the display element $D_{30}$. Consequently, as the display panel 24 can simultaneously display both the actual recording time and the recording time excluding the silent time, the particular advantage can be obtained that the recording time of the digital audio data memory unit is rather short, such as in a semiconductor memory.

While the invention has been described in terms of certain preferred embodiments, and exemplified with respect thereto, those skilled in the art will readily appreciate that various modifications, changes, omissions, and submissions may be made without departing from the technical spirit of the invention.

For instance, although the semiconductor memory was utilized as the recording medium in the previous embodiment, a magnetic tape may be substituted for the semiconductor memory. The recording/reproducing apparatus including the digital memory device according to the present invention may be applied to a so-called "data bank" in which various kinds of data such as telephone numbers, addresses, and names can be stored in the digital memory device.

Furthermore it is possible to employ decision means for directing whether the silent time is to be reproduced, or omitted.

Claims:

1. A recording/reproducing apparatus (100) characterized comprising:

acoustic converter means (1) for performing acoustic conversion between acoustic information containing desirable and undesirable acoustic information, and analogue audio signals;

A/D-converting means (15) for converting the analogue audio signals into digital audio data;

analyzing means (6) for analyzing said undesirable acoustic information to produce undesirable audio time data;

memory means (11; 12) for storing the digital audio data converted by said A/D-converting means (15) and for storing said undesirable audio time data derived from the analyzing means (6);

first control means (20) for prohibiting said digital audio data being recorded in the memory means (11; 12) while the undesirable acoustic information is being analyzed by the analyzing means (6);

readout means (14) for reading out said digital audio data previously stored in the memory means (11; 12);

D/A-converting means (16) for D/A-converting the read digital audio data into corresponding analogue audio signals; and

second control means (20) for interrupting operation of said readout means (14) and for performing reproduction of a time period of the undesirable audio time data previously stored in the memory means (11; 12), whereby said desirable audio information is derived from the acoustic converter means (1) in conjunction with said undesirable audio information to reproduce said acoustic information.

2. An apparatus (100) as claimed in claim 1, characterized in that said analyzing means includes a comparator (3) producing as a silent time signal an audio signal whose acoustic level is involved in a predetermined level, and measuring means (6) for measuring a time duration of occurrence of said silent time signal derived from said comparator (3) to produce said undesirable audio time data.

3. An apparatus (100) as claimed in claim 1, characterized in that said memory means (12) includes at least a memory region for storing first data on said desirable acoustic information and second data on said undesirable acoustic information.

4. An apparatus (100) as claimed in claim 1, characterized in that said memory means (11; 12) is constituted by a random access memory for storing said desirable audio data and undesirable audio time data.

5. An apparatus (100) as claimed in claim 1, characterized in that said memory means (12) includes a memory region for storing data for indicating whether said data previously stored in said memory means (12) correspond to said desirable audio data or said undesirable audio time data.

6. An apparatus (100) as claimed in claim 1, characterized in that said memory means (11; 12) is constituted by a random access memory for storing said desirable audio data in a memory region thereof which is addressed by address means (18), and said first control means (20) includes means (20a; 20b) for prohibiting a memory region of said random access memory being addressed by said address means (18).

7. An apparatus (100) as claimed in claim 1, characterized in that said memory means (11; 12) is constituted by a random access memory for outputting said desirable audio data from a memory region thereof which is addressed by address means (18), and said second control means (20) includes means (20a; 20b) for prohibiting said desirable audio data being read out by addressing said memory region by said address means (18).

8. An apparatus (100) as claimed in claim 1, characterized in that said analyzing means (6) is operable in response to a signal derived from a timepiece circuit (7; 8; 21).

9. An apparatus (100) as claimed in claim 1, characterized in that said memory means (11; 12) is constituted by a single semiconductor memory device.

10. An apparatus (100) as claimed in claim 1, characterized in that said memory means (11; 12) is constituted by a magnetic recording medium.

11. An apparatus (100) as claimed in claim 1, characterized in that said memory means is constructed in a first single semiconductor memory device (11) for storing said desirable audio data and a second single semiconductor memory device (12) for storing said undesirable audio time data.

F I G. 1

F I G. 2

FIG. 3

FROM
ADDRESS
COUNTER
14g

FROM DATA
ANALYZING
UNIT 6

J0

12a

FROM A/D
CONVERTER
UNIT 15

AUDIO DATA
MEMORY UNIT
12

F I G. 4

| 0001 | 1 | AUDIO DATA #1 |
| 0002 | 0 | 00000001 |
| 0003 | 1 | AUDIO DATA #2 |
| | | |
| | | |
| 1111 | | |

ADDRESS
NUMBER

ADDRESS
DATA ON
SILENT
TIME

AUDIO CODE DATA

12b

TO ADDRESS
COUNTER 18

TO RECORDING/
REPRODUCING UNIT 14

FROM
ADDRESS
COUNTER 18

FROM DATA
ANALYZING
UNIT 6
A

SILENT TIME
MEMORY UNIT 11

F I G. 5

| 0001 | 00000111 |
| 0002 | |
| | |
| | |

ADDRESS
NUMBER

SILENT TIME
DATA

TO MEMORY CONTROLLER 10

FIG. 6A — INPUT AUDIO SIGNAL X

FIG. 6B — COMPARATOR OUTPUT Y

FIG. 6C — COINCIDENCE DETECTOR OUTPUT 6e

FIG. 6D — F/F 6c OUTPUT J1

FIG. 6E — RISING-EDGE DETECTOR 6b OUTPUT J0

5/7

0165604

FIG. 7

FROM
ADDRESS
COUNTER
14g

FROM DATA
ANALYZING
UNIT 6
J0

12a

FROM A/D
CONVERTER
UNIT 15

AUDIO DATA
MEMORY UNIT 12

| | | |
|---|---|---|
| 0 0 0 1 | 1 | AUDIO DATA #1 |
| 0 0 0 2 | 0 | 0 0 0 0 0 1 1 1 |
| 0 0 0 3 | 1 | AUDIO DATA #2 |
| | | |
| 1 1 1 1 | 0 | 0 0 0 0 0 1 0 1 |

SILENT
TIME DATA

ADDRESS
NUMBER

AUDIO CODE DATA

12b

TO ADDRESS
COUNTER 18

TO RECORDING /
REPRODUCING UNIT 14

FIG. 9

DISPLAY PANEL 24

D30

5  10  15  20  25  30

D0          D20    D29

S M T W T F S

sec

P

# F I G. 8